# EUROPÄISCHE PATENTANMELDUNG

(11) **EP 0 531 857 A1**
(43) Veröffentlichungstag der Anmeldung: **17.03.1993**
(21) Anmeldenummer: 92114903.5
(22) Anmeldetag: 01.09.1992
(51) Int. Cl.: G06F 1/16

(54) **Hilfsmittel für einen Bildschirmarbeitsplatz**

(30) Priorität: 12.09.1991 DE 4130248
(71) Anmelder: Droscha, Nikolaus, Dr. Med., D-76275 Ettlingen (DE)
(72) Erfinder: Droscha, Nikolaus, Dr. Med., D-76275 Ettlingen (DE)
(74) Vertreter: Moser, Herbert, Dr.-Ing. Patentanwalt

(57) **Zusammenfassung**

Es soll ein Hilfsmittel zur Verminderung der optischen Gesichtsfeldbelastung für einen Bildschirmarbeitsplatz angegeben werden, welches umfassende Anpassungsmöglichkeiten mit einfachem Aufbau vereinigt. Dies erfolgt erfindungsgemäß dadurch, daß eine den Rand des Monitorgehäuses umgreifende ebenflächige Blende (6) vorgesehen ist.

## Beschreibung

Die Erfindung betrifft ein Hilfsmittel zur Verminderung der optischen Gesichtsfeldbelastung für einen Bildschirmarbeitsplatz mit Monitor. Außerdem werden vorteilhafte Ausbildungen eines Monitorgehäuses zur Halterung dieses Hilfsmittels angegeben.

Bildschirmarbeit bedeutet eine komplexe körperliche und physische Beanspruchung, bei der primär die Augen belastet werden. Neben einer guten Verstellbarkeit des Monitors zur Einstellung einer optimalen Sehdistanz und zur Anpassung an verschiedene Sitzhaltungen erweist sich die Verminderung der optischen Gesichtsfeldbelastung am Bildschirmarbeitsplatz als besonders vordringlich, weil diese die Bedienungsperson erheblich belastet.

Als Gesichtsfeld bezeichnet man den Ausschnitt der Umwelt, den ein unbewegtes Auge bei fixiertem Kopf sieht. Die Prüfung des Gesichtsfeldes kann mit einem Perimeter erfolgen, und aus der Überlagerung der Gesichtsfelder beider Augen ergibt sich beim Normalsichtigen eine geschlossene, annähernd symmetrische Konturkurve des Gesichtsfeldes, die im Nasenbereich einsattelt. Dieses Gesichtsfeld wird durch die Wahrnehmung von Bewegungsvorgängen und insbesondere durch die Einstrahlung von Lichtquellen zusätzlich belastet.

Kastenartige Blendschutzhilfsmittel, wie sie beispielsweise in der DE 38 34 315 A1 und in den DE-GM G 89 08 883.2 sowie G 91 03 071.4 vorbeschrieben sind, zeigen in der Praxis nur eine geringe Akzeptanz.

Die Erfindung geht von der Aufgabenstellung aus, ein Hilfsmittel zur Verminderung der optischen Gesichtsfeldbelastung für einen Bildschirmarbeitsplatz mit Monitor zu schaffen, mit dessen Hilfe die optische Gesichtsfeldbelastung wesentlich gemindert bzw. völlig ausgeschaltet werden kann.

Dies erfolgt gemäß der Erfindung dadurch, daß eine den Rand des Monitorgehäuses umgreifende, ebenflächige Blende vorgesehen ist. Dadurch wird die unerwünschte Einstrahlung von Lichtquellen bzw. Wahrnehmung von Bewegungsvorgängen weitgehend abgeschirmt. Die optisch wirksame Abschirmfläche der ebenflächigen Blende liegt je nach Größe des Bildschirms bei dem verwendeten Monitor zweckmäßig zwischen dem zweifachen und dem fünfundzwanzigfachen der sichtbaren Bildschirmoberfläche. Bei einem gebräuchlichen 14 Zoll Bildschirm kann die Abschirmfläche zweckmäßig zwischen dem zwei- und sechsfachen der sichtbaren Bildschirmoberfläche liegen. Die Abmessungen und die Kontur der ebenflächigen Blende lassen sich im einzelnen den besonderen Lichtverhältnissen am Arbeitsplatz sowie der individuell verschiedenen Kontur des Benutzergesichtsfeldes und zusätzlich auch ästhetischen Gesichtspunkten anpassen. Durch die ebenflächige Blende wird die Dialogbereitschaft am Arbeitsplatz nicht eingeschränkt.

Die Blende kann vorteilhaft eine optisch gleichförmige Oberfläche, beispielsweise eine einfarbige Gestaltung in weißer Grundfarbe oder auch eine gleichförmige lichtstreuende Beschichtung, z.B. eine Wabenstruktur, aufweisen.

Die Randkontur der Blende ist vorteilhaft dem Verlauf der Randkurve des Gesichtsfeldes der Bedienungsperson angepaßt, wobei im Mittelbereich eine zweckmäßige Einsattelung vorgesehen sein kann.

Die Blende kann auf verschiedene Weise vorteilhaft direkt am Monitorgehäuse befestigt werden. Dabei erweist sich gegebenenfalls eine Ausrichtung mit der Hauptebene der Blende parallel zur Bildschirmebene des Monitors, aber auch u.U. eine geneigte Anbringung als zweckmäßig. Bei einer vorteilhaften Ausbildung ist die Blende auf das Monitorgehäuse aufsetzbar, wobei entsprechende Aufnahmeausnehmung oder Halteklammern zweckmäßig bereits herstellerseitig angebracht werden können. Hierzu kann das Gehäuse des Monitors vorteilhaft so ausgebildet sein, daß ein Adapter zur Aufnahme der Blende integriert ist.

Die Blende kann zweckmäßig als einteiliger Zuschnitt aus im wesentlichen ebenflächigem Material hergestellt sein. In einer vorteilhaften Ausbildung weist die Blende vorbereitete Zuschnittlinien für mehrere verschiedenen Körpergrößen von Bedienungspersonen entsprechende Randkonturen des Gesichtsfeldes auf.

Die Zuschnittlinien für die den verschiedenen Körpergrößen aber auch der gewünschten Abschirmwirkung angepaßten Randkonturen des Gesichtsfeldes werden unter Berrücksichtigung eines günstigsten Augenabstandes von ca. 75 cm von der Bildschirmoberfläche entsprechend der DIN-Norm-Anforderung festgelegt. Dabei können vorteilhaft für nachfolgende Gruppen von Körpergrößen unterschiedliche Perzentilen auf der Blende vorbereitet werden:

| | | |
|---|---|---|
| Körpergröße | 150 - 160 cm innerste Konturkurve | 1. Perzentile |
| | 160 - 165 cm | 2. Perzentile |
| | 165 - 170 cm | 3. Perzentile |
| | 170 - 175 cm | 4. Perzentile |
| | 175 - 180 cm | 5. Perzentile |
| | 180 - 185 cm | 6. Perzentile |
| | 185 - 190 cm äußerste Konturkurve | 7. Perznetile. |

Insgesamt dürfte eine Unterteilung mit sieben Konturlinien des Gesichtsfeldes im allgemeine ausreichen.

Es kann ferner zweckmäßig sein, daß die Blende vorbereitete Zuschnittlienien für verschiedene Gehäusegrößen des Monitors aufweist.

Die Blende kann aus verschiedenen Materialien, zweckmäßig aus Metall, Kunststoff oder Karton, bestehen. Besonders die formsteife Kartonausbildung, welche u.U. in einfacher Klemmverbindung auf das Gehäuse des Monitors aufgesteckt wird, erfüllt die Forderung nach einem wirkungsvollen und kostengünstigen Hilfsmittel für die Arbeit an einem Bildschirmarbeitsplatz. Eine andere vorteilhafte Ausbildung kann gegebenenfalls darin bestehen, daß an der Blende zum Aufsetzen auf das Monitorgehäuse eine Manschette aus Metall oder Kunststoff bzw. ein angepaßter Rahmenteil, z.B. aus Holz, vorgesehen ist.

Der Benutzer kann dann, beispielsweise bei der Kartonausfühung, durch einfachen Messerzuschnitt längs der Führung der vorbereiteten Zuschnittlinien den Karton passend an die Konturlinien des Gesichtsfeldes bzw. an die Umgebungslichtverhältnisse zuschneiden. Dabei können zusätzlich auch Anomalien des Gesichtsfeldes berücksichtigt werden.

Für die vorbereiteten Zuschnittlinien sind verschiedene Ausbildungen möglich. Sie können beispielsweise als einfache Drucklinien oder zweckmäßiger als Prägelinien bzw. Perforationslinien ausgebildet sein. Die Farbegestaltung der Blende ist im wesentlichen frei und kann den vorhandenen Gegebenheiten und der vorhandenen Einrichtung zweckmäßig angepaßt werden.

Die Blende wird zweckmäßig so auf das Gehäuse des Monitors aufgesetzt, daß sie das Gehäuse dreiseitig umfaßt, wobei sich ihre Flächenteile oberhalb der Unterkante des Monitorgehäuses befinden.

Die Blende kann ferner zweckmäßig an vorbereiteten Knicklinien oder durch scharnierartige Verbindungselemente seitlich ab- bzw. aufklappbare Teilstücke aufweisen. Dadurch wird die Blende z.B. zum Transport auf kleineres Format zusammenlegbar und es lassen sich im Gesichtsfeld störend hervortretende Lichtquellen zusätzlich ausschalten. Dadurch läßt sich ein seitlich rechts oder links belastetes Gesichtsfeld ausgleichen. Das Ausgangsformat der Blende bildet gegebenenfalls zweckmäßig einen Kartonzuschnitt von 70 cm Höhe und 100 cm Breite.

Bei einer zweckmäßigen Ausbildung kann die Blende ferner aus einem optisch einseitig durchsichtigen Werkstoff bzw. aus einem durchscheinenden Werkstoff, beispielsweise aus angerauhtem Plexiglas oder textilem Werkstoff, bestehen. Dadurch wird u.U. bereits eine hinreichende Ausschaltung des störenden Fremdlichteinfalls erreicht.

Aus Gründen der Flexibilität kann die Blende für Transport und Montage zweckmäßig in mehrere Teile, beispielsweise in drei Teile, unterteilt werden. Der Hauptteil der Blende kann dabei das obere Gesichtsfeld etwa 50 % des Gesichtsfeldanteils von den über dem Bildschirm einfallenden hohen Lichtwerten abblenden. Die beiden unteren Seitenteile der Blende sollen dann die hohen Lichtwerte, die auf das Tastenfeld und auf die Lesevorlage fallen, entsprechend abblenden. Die Verbindung der Einzelteile der Blende untereinander sowie mit dem Monitorgehäuse kann in verschiedener Weise zweckmäßig unter Verwendung einer doppelseitigen Klemmschiene erfolgen. Diese Klemmschiene läßt sich vorteilhaft durch vorgesehene Ösen unter Verwendung eines gummielastischen Bandes am Umfang des Monitorgehäuses fixieren.

Durch die Verwendung der neuartigen Blende werden die körperlichen Belastungen des Sehapparates bei der Bildschirmarbeit, besonders die der Augenmuskeln, wesentlich vermindert. Damit ist eine grundlegende Verbesserung der Arbeitsproblematik an den Bildschirmarbeitsplätzen zu erwarten.

Die Erfindung soll nachfolgend an Ausführungsbeispielen näher erläutert werden; es zeigen:
- Fig. 1: eine Darstellung eines Bildschirmarbeitsplatzes mit auf dem Monitor aufgesetzter Blende,
- Fig. 2: eine Draufsicht auf eine Blende mit vorbereiteten Zuschnittlinien, wie sie bei einem Arbeitsplatz nach Fig. 1 verwendet werden kann,
- Fig. 3: eine Alternativausbildung des Blendenzuschnitts mit seitlich abknickbarem Teilstück,
- Fig. 4: eine aus drei Teilstücken zusammengesetzte Blende,
- Fig. 5: eine isometrische Ansicht einer doppelseitigen steckbaren Halteschiene für eine nach Fig. 4 unterteilte Blende,
- Fig. 6: eine unsymmetrische Blendenausbildung mit seitlich aufklappbarem Teilstück.

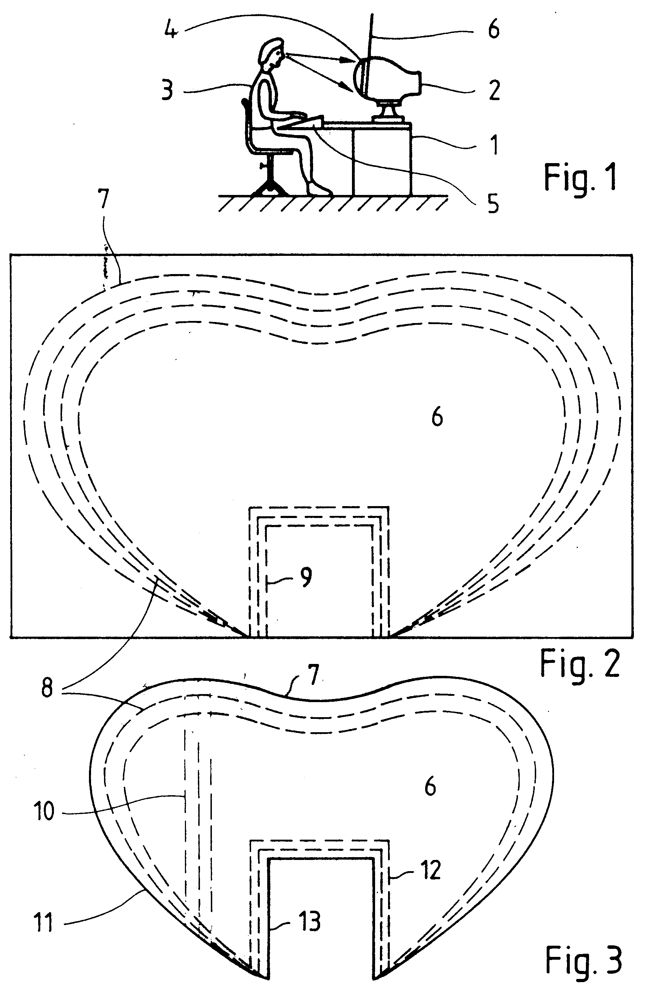

In der schematischen Darstellung nach Fig. 1 erkennt man einen Arbeitstisch 1, auf dem ein Monitor 2 aufgestellt ist. Eine Bedienungsperson 3 betrachtet den Bildschirm 4 des Monitors 2 und bedient gleichzeitig eine Tastatur 5. Auf das Monitorgehäuse ist eine ebenflächige Blende 6 als Kartonzuschnitt aufgesteckt, welche die optische Gesichtsfeldbelastung wesentlich vermindert.

Eine verkleinerte Draufsicht einer solchen Blende 6 zeigt Fig. 2. Die den verschiedenen Körpergrößen entsprechenden Zuschnittlinien der Randkonturen des Gesichtsfeldes 7, sogenannte Gesichtsfeldperzentile, sind als Prägelinien 8 angegeben, wobei die Anpassung durch entsprechenden Zuschnitt erfolgen kann. Eine rechteckige einseitig offene Aussparung 9 dient zum Aufstecken der Blende 6 auf das Gehäuse des Monitors 2 (vgl. Fig. 1).

Bei der alternativen Ausbildung nach Fig. 3 ist am linken Seitenflügel des Zuschnitts der Blende 6 eine Knicklinie 10 vorbereitet, mit der ein seitlich abklappbares Teilstück 11 zur Aussschaltung störender Nebenlichteffekte seitlich ab geklappt werden kann. Derartige Knicklinien lassen sich gegebenenfalls in verschiedener Verlaufsrichtung und in mehrfacher Parallelanordnung ausführen. Die Knicklinien werden im allgemeinen rückseitig angebracht und durch Perforationspunkte vorbereitet.

Eine äußere Aussparung 12 ist ebenso wie eine innere Aussparung 13 als Zuschnitt vorperforiert, so daß die Blende 6 auf Monitore mit verschiedenen Abmessungen, z.B. auf einen Monitor mit 14 Zoll Bildschirm aufgesteckt werden kann.

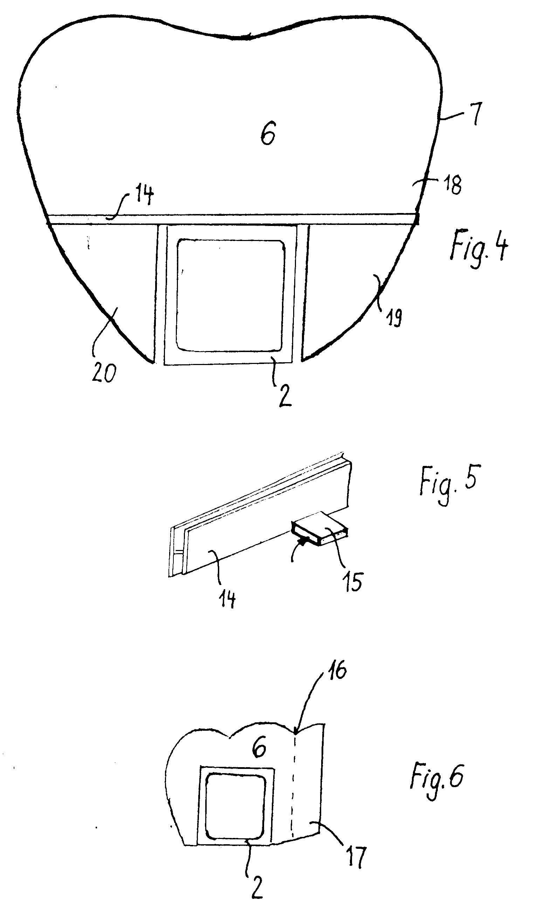

In Fig. 4 ist eine in drei Teile 18,19,20 unterteilte Blende 6 dargestellt. Die einzelnen Teile sind in eine doppelseitige Klemmleiste 14 eingesteckt. Die doppelseitige Klemmleiste 14 weist an ihrer Rückseite mit Langlochausnehmungen versehen Laschen 15 auf und kann damit durch Hindurchziehen eines gummieleastischen Bandes im Randbereich des Monitorgehäuses fixiert werden.

Im Gegensatz zu den symmetrischen Blendengestaltungen nach Fig. 2, 3 und 4 ist in Fig. 6 eine unsymmetrische Blende 6 gezeigt, die ein rechtsseitig längs einer Knicklinie 16 abklappbares Teilstück 17 aufweist.

Der Monitor zur Bestückung mit einer Blende nach der oben angegebenen Art kann zweckmäßig so ausgebildet sein, daß das Gehäuse Halterungselemente, z.B. Klemmfedern zur Aufnahme der Blende oder ihrer Teile, aufweist. Zweckmäßig kann eine umlaufende Randnut zum Einsetzen der Blende vorgesehen sein. Eine andere gegebenenfalls vorteilhafte Ausbildung kann dadurch erreicht werden, daß im Bereich des Bildschirms an der Gehäusevorderseite eine umlaufende ebenflächige Aufsteckfläche zum Aufstecken einer mit der Blende verbundenen Aufsteckmanschette vorgesehen ist. In der einfachsten Form läßt sich die Blende sogar auch ohne vorbereitete Halterungen auf das Gehäuse aufsetzen.

Für die praktische Anwendung wird die Blende mit den vorbereiteten Zuschnitt- und Knicklinien vorteilhaft zusammen mit einem entsprechenden Messerstift und einer visooptischen Gebrauchsanleitung sowie Gebrauchsbeschreibung als anwendungsfertiges Set geliefert.

Da eine undurchsichtige Blende wegen ihrer Größenabmessungen u.U. Akzeptanzprobleme hervorrufen könnte, erscheint es in weiterer Ausbildung der Erfindung gegebenenfalls zweckmäßig, die Blende aus einem optisch semipermeablen Werkstoff oder aus einem durchscheinenden Werkstoff herzustellen. Ein solcher semipermeabler Werkstoff kann, beispielsweise durch eine extrem dünne Edelmetallbeschichtung von synthetischem organischen Glas, hergestellt werden und ermöglicht einen Durchblick auf andere Bildschirmarbeitsplätze in der näheren Umgebung, weil trotzdem die aus der Umgebung stammende optische Gesichtsfeldbelastung sicher ausgeschaltet wird. Im einzelnen lassen sich die verschiedensten optischen Werkstoffe mit einseitiger Durchblickrichtung oder durchscheinend anwenden. Bei der semipermeablen Ausführung ist die Blende in der Weise anzuordnen, daß ein Durchblick von der Bedienungsperson des Bildschirmarbeitsplatzes her möglich ist, während umgekehrt die einstrahlenden Lichtquellen und damit die Gesichtsfeldbelastung ausgeschaltet werden.

## Patentansprüche

1. Hilfmittel zur Verminderung der optischen Gesichtsfeldbelastung für einen Bildschirmarbeitsplatz mit Monitor, **dadurch gekennzeichnet,**
daß eine den Rand des Monitorgehäuses umgreifende ebenflächige Blende (6) vorgesehen ist.

2. Hilfsmittel nach Anspruch 1, **dadurch gekennzeichnet,** daß die optisch wirksame Abschirmfläche der Blende (6) zwischen dem zweifachen und dem fünfundzwanzigfachen der sichtbaren Bildschirmoberfläche beträgt.

3. Hilfsmittel nach Anspruch 1, **dadurch gekennzeichnet,** daß die Blende (6) auf der Betrachterseite eine optisch gleichförmige Oberfläche aufweist.

4. Hilfsmittel nach Anspruch 1, **dadurch gekennzeichnet,** daß die Kontur (7) der Blende (6) dem Verlauf der Randkurve des menschlichen Gesichtsfeldes angepaßt ist.

5. Hilfsmittel nach Anspruch 4, **dadurch gekennzeichnet**, daß die Kontur (7) der Blende (6) eine Einsattelung aufweist.

6. Hilfsmittel nach Anspruch 1, **dadurch gekennzeichnet,** daß die Blende am Monitorgehäuse befestigbar ist.

7. Hilfsmittel nach Anspruch 6, **dadurch gekennzeichnet,** daß die Blende (6) auf das Monitorgehäuse aufsteckbar ist.

8. Hilfsmittel nach Anspruch 6, **dadurch gekennzeichnet,** daß die Blende (6) eine Aufsteckmanschette aufweist.

9. Hilfsmittel nach Anspruch 1, **dadurch gekennzeichnet,** daß die Blende (6) als einteiliger Zuschnitt aus im wesentlichen ebenflächigem Material hergestellt ist.

10. Hilfsmittel nach Anspruch 9, **dadurch gekennzeichnet,** daß die Blende vorbereitete Zuschnittlinien (8) für mehrere entsprechende Randkonturen (7) aufweist.

11. Hilfsmittel nach Anspruch 9, **dadurch gekennzeichnet,** daß die Blende (6) vorbereitete Zuschnittlinien für verschiedene Monitorgehäuse aufweist.

12. Hilfsmittel nach Anspruch 1, **dadurch gekennzeichnet,** daß die Blende (6) aus Metall besteht.

13. Hilfsmittel nach Anspruch 1, **dadurch gekennzeichnet,** daß die Blende (6) aus Kunststoff besteht.

14. Hilfsmittel nach Anspruch 1, **dadurch gekennzeichnet,** daß die Blende (6) aus Karton besteht.

15. Hilfsmittel nach Anspruch 1, **dadurch gekennzeichnet,** daß die Blende (6) seitlich auf- bzw. abklappbare Teilstücke (11;17) aufweist.

16. Hilfsmittel nach Anspruch 1**, dadurch gekennzeichnet,** daß die Blende (6) aus einem optisch einseitig durchsichtigen Werkstoff besteht.

17. Hilfsmittel nach Anspruch 1, **dadurch gekennzeichnet,** daß die Blende (6) aus einem durchscheinenden Werkstoff besteht.

18. Hilfsmittel nach Anspruch 9**, dadurch gekennzeichnet,** daß das Ausgangsformat der Blende (6) 70 cm Höhe, 100 cm Breite beträgt.

19. Hilfsmittel nach Anspruch 1, **dadurch gekennzeichnet,** daß die Blende in mehrer Teilstücke (18,19,20) zerlegbar ist.

20. Monitor zur Bestückung mit einer Blende nach Anspruch 1, **dadurch gekennzeichnet,** daß am Monitorgehäuse eine Halterung für die Blende (6) angeordnet ist.

21. Monitor nach Anspruch 20, **dadurch gekennzeichnet,** daß das Monitorgehäuse als Halterung der Blende (6) ausgebildet ist.

22. Monitor nach Anspruch 21, **dadurch gekennzeichnet,** daß das Monitorgehäuse eine umlaufende Randnut zum Einstecken der Blende (6) aufweist.

23. Monitor nach Anspruch 21, **dadurch gekennzeichnet,** daß das Monitorgehäuse eine umlaufende Aufsteckfläche zum Aufstecken einer Aufsteckmanschette der Blende (6) aufweist.
